# EUROPEAN PATENT APPLICATION

(11) **EP 2 186 636 A1**
(43) Date of publication of application: **19.05.2010**
(21) Application number: 09175799.7
(22) Date of filing: 12.11.2009
(51) Int. Cl.: B32B 38/00, B32B 27/08

(54) **Process for the production of decorative panels based on thermoplastic resin, plant for carrying out said process and panels obtained thereby**

(30) Priority: 13.11.2008 IT TO20080836
(71) Applicant: ABET LAMINATI S.p.A., I-12042 Bra (Cuneo) (IT)
(72) Inventor: Scarzello, Sabino, 12042, Bra (CN) (IT)
(74) Representative: Robba, Pierpaolo

(57) **Abstract**

A process for the production of decorative panels based on thermoplastic resin and decorative plastic laminates and/or scraps from their manufacture, comprising the steps of:
a) forming a substrate of composite material, starting from scraps or residues from the manufacture or the use of the decorative plastic laminates; b) subjecting said substrate to a pre-treatment of plasma surface activation; c) ennobling said substrate through the application of a decorative layer.

## Description

### Technical field

The present invention relates to a process for the production of decorative panels based on thermoplastic resin, to a plant for carrying out said process and to the panels obtained thereby.

More particularly the invention relates to a process for ennobling composite panels, even with high thickness, based on thermoplastic resin and/or decorative plastic laminates and/or scraps from their working, in particular decorative plastic laminates such as for instance HPL's (high pressure laminates) or CPL's (continuous pressure laminates).

### Prior art

According to the prior art, the manufacturing cycle of the laminates may include a step of applying one or more decorative layers of different kinds, such as for instance:
- a sheet of decorative paper impregnated with a synthetic resin, for instance an aminoplastic resin such as melamine-formaldehyde (MF) resin, or a polyester (PES) resin, or an acrylo-polyurethane resin, or urea-formaldehyde (UF) resin;
- a thin metal sheet, for instance of aluminium, copper or steel;
- a paint layer, for instance a water based or solvent based paint;
- a polymeric film, for instance of polyester (PES), polyethylene terephtalate (PET), polyvinylchloride (PVC);
- a veneer sheet of natural wood;
- a layer of fabric or non-woven fabric.

In particular, the so-called HPL laminates comprise internal layers of fibrous material, generally Kraft paper, impregnated with thermosetting resins (phenolic and/or aminoplastic resins), and one or more surface layers of aminoplastic resins (mainly melamine resins), which impart the desired decorative and/or colour appearance and which are thermally bound at a pressure generally not lower than 5 MPa.

EP 0 395 128 in the name of the Applicant discloses a process for manufacturing a thermoformable composite material, obtained by mixing decorative plastic laminates, for instance HPL's, and/or scraps from their working with thermoplastic resins. According to the teaching of said patent, the material obtained in this manner can be worked in various manners, and in particular it may be reduced to grains in order to be subsequently injection moulded for producing sheets or articles of various kinds.

The sheets and the articles obtained in this manner are however scarcely aesthetically appealing, and therefore they are mainly used to manufacture products that do not demand high aesthetical qualities, such as for instance panel for linings of commercial vehicles, soundproofing panels, partitioning panels for the building industry, technical articles and so on.

DE 41 41 203 concerns a method of recycling ground or granulated rubber or plastics by the addition of a polyurethane or melamine resin. The method includes a flocculation step, which may be preceded by a physical pre-treatment, for instance by means of plasma, or a chemical fluorination pre-treatment, the aims of which however are not disclosed.

US 4,468,264 discloses a method of producing HPL decorative plastic laminates by using cellulose fibres, a pulverised filler obtained by recycling residues from the manufacture of plastic laminates and a thermosetting resin. Use of a plasma treatment is not provided for in that method.

Due to the characteristics of the thermoplastic resin, especially polypropylene, used for their manufacture, composite panels based on thermoplastic resin and decorative plastic laminates and/or scraps from their working are wholly hydrophobic and hence hardly wettable, so that they gluing is difficult.

In order it is possible to impart the desired aesthetic appearance to a composite plastic material, in particular of the kind obtained in accordance with the teaching of EP 0 395 128, it is thus necessary to make the panel surface suitable for the adhesion of the decorative layer commonly used in the laminate field and consisting, for instance, of decorative papers impregnated with melamine-formaldehyde (MF) resin, of a metal sheet, of paint layers and so on.

Some attempts have been made in the past for ennobling substrates consisting of panels obtained by the method in accordance with the teaching of EP 0 395 128, by applying decorative layers of various kind to such panels. The results however have been unsatisfactory, especially in respect of the adhesion of the decorative layer to the substrate. Indeed, in order the final product can find a commercial destination justifying the higher production costs even if it is made from recycled material, its aspect must have aesthetical characteristics similar to those of a decorative laminate.

### Description of the invention

Thus, it is a first object of the present invention to provide a process for ennobling panels based on thermoplastic resin and/or decorative plastic laminates, for instance decorative plastic laminates arrived at the end of their life cycle, and/or scraps from their working, and obtained in accordance with the teaching of EP 0 395 128, which forms an integral part of the present description.

The ennobled panels obtained by means of the process according to the invention may be advantageously utilised for making aesthetically appealing surfaces, without need for further linings.

Thanks to the invention, the recycled material obtained in this manner is therefore ennobled so that is can act as a decorative lining.

Moreover, the need arises to obtain ennobled panels of high thickness, so that the panels are substantially self-bearing and the low cost resulting from recycling scraps from the manufacture or the use of decorative plastic laminates, as taught in EP 0 395 128, can be exploited.

Thus, it is another object of the present invention to provide a process for manufacturing a high-thickness ennobled composite panel, based on thermoplastic resin and decorative plastic laminates, for instance scraps or residues from the manufacture and the use of the decorative plastic laminates, and/or scraps from their working.

It is a further object of the invention to provide a plant for obtaining panels of recycled plastic material with any thickness, which plant is cheap and easy to be industrialised.

The above and other objects are achieved by the process, the plant and the product as claimed in the appended claims.

Advantageously, according to the invention, thanks to the cold plasma treatment in air or process gases, preferably at atmospheric pressure, it is possible to make the surface of the substrate (composite panel) suitable for the subsequent ennobling through the application of one or more decorative layers.

Advantageously, the ennobling step according to the invention imparts to the material obtained both the properties of surface resistance, which make the material suitable for the intended application, and the desired decoration.

In particular, the process according to the invention allows obtaining a high quality on both panel faces, which have no defects, are homogeneous and exhibit a high planarity.

Moreover, the process according to the invention proves to be suitable for industrial application and results in production costs compatible with the nature of the product obtained.

Advantageously moreover, always thanks to the process according to the invention, it is possible to obtain panels ennobled on one or both faces.

According to a preferred embodiment of the invention, it is also possible to obtain high-thickness articles, which are suitable for the manufacture of self-bearing decorative panels.

Advantageously, use of a hot press for the ennobling step ensures a further compaction of the substrate, and this results in a significant and measurable increase in the modulus of elasticity of the stratified composite panel, with a consequent improvement in the mechanical strength, to the advantage of the self-bearing characteristics of the final product obtained.

### Brief Description of the Figures

Some preferred embodiments of the invention will be described by way of non limiting example with reference to the accompanying Figures, in which:
- Fig. 1 is a block diagram of a preferred embodiment of a plant according to the invention;
- Fig. 2 is a block diagram of the extrusion station;
- Fig. 3 is a block diagram of the plasma pre-treatment station;
- Fig. 4 is a block diagram of the ennobling station.

### Description of a Preferred Embodiment

According to the invention, the process for obtaining decorative panels based on thermoplastic resin and decorative plastic laminates and/or scraps from their working comprises the steps of:
- forming a substrate of composite material, starting from scraps or residues from the manufacture of the decorative plastic laminates and thermoplastic resin;
- subjecting said substrate to a pre-treatment of plasma surface activation;
- ennobling said substrate through the application of one or more decorative layers.

The step of forming the substrate of composite material is preferably performed in accordance with the teaching of patent EP 0 395 128, which is referred to for further details.

Said forming step essentially comprises:
- grinding a material consisting of scraps and/or residues from the manufacture of decorative plastic laminates, which material comprises at least 50% by weight of cellulose and at least 20% by weight of thermosetting resins used to impregnate said cellulose, until the material is reduced to a fine powder;
- preparing a mixture containing a thermoplastic resin and the above ground scrap material, said thermoplastic resin being at least 20% by weight of the mixture;
- adding possible additives
- heating and reacting said mixture, at a temperature comprised between 130 and 260°C;
- forming semifinished articles by extruding and cooling said mixture.

Preferably, said fine powder is composed of particles having sizes or diameter smaller than 4 mm, and said thermoplastic resins (preferably selected out of polyethylene, polypropylene, polyvinyl chloride, acrylonitrile-butadiene-styrene (ABS) resins and acetal resins) are present in percentages comprised between 30 and 60% by weight.

Moreover, a preferred embodiment of said step of forming the substrate of composite material will be described in more detail below, with reference to the plant for carrying out the process according to the invention.

According to the invention, the pre-treatment step of plasma surface activation is preferably carried out in air or other process gases, at atmospheric pressure.

Said plasma surface treatment is a physical process of electrical nature in which partly ionised air, containing very instable and reactive chemical species, allows chemically modifying, in stable manner, the material of the substrate to which it is applied, thereby making it suitable for the adhesion of certain kinds of materials, such as decorative films, decorative papers, thin metal sheets and paints.

According to the invention, the ennobling step is preferably performed in a press with hot-cold cycle or is carried out by painting in a suitable plant, for instance by curtain coating technology, or by spray painting or roller painting, or by moulding, and so on.

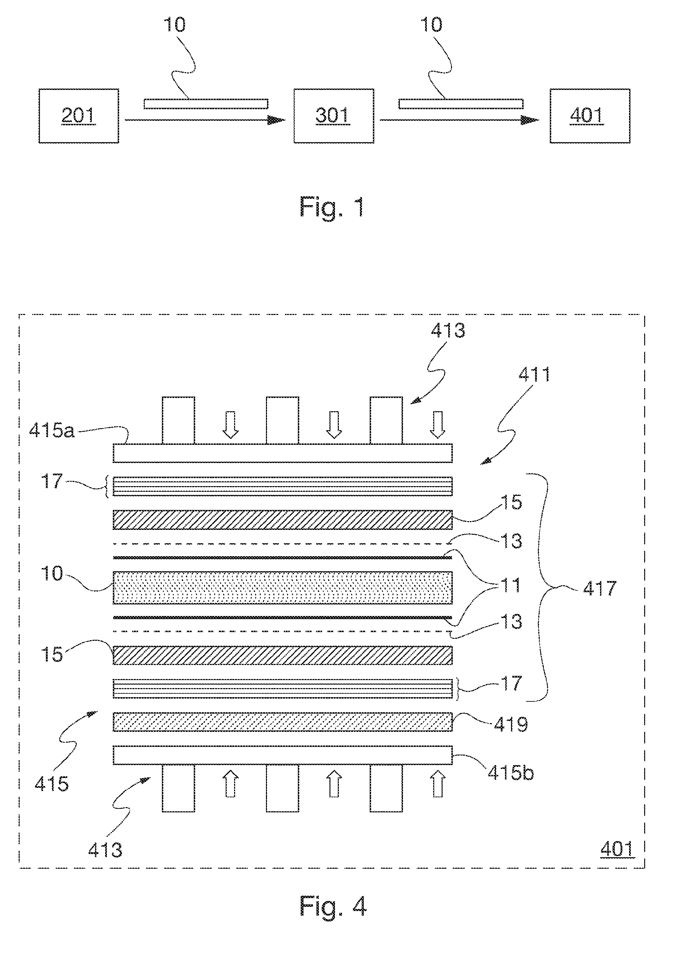

Referring to Fig. 1, the plant for carrying out the process according to the invention for the production of decorative panels based on thermoplastic resin and decorative plastic laminates and/or scraps from their working comprises:
- an extrusion station 201 for producing the substrate of composite material, preferably in form of a sheet 10;
- a station 301 for plasma pre-treatment of said sheets 10;
- a station 401 for ennobling said plasma-activated sheets 10.

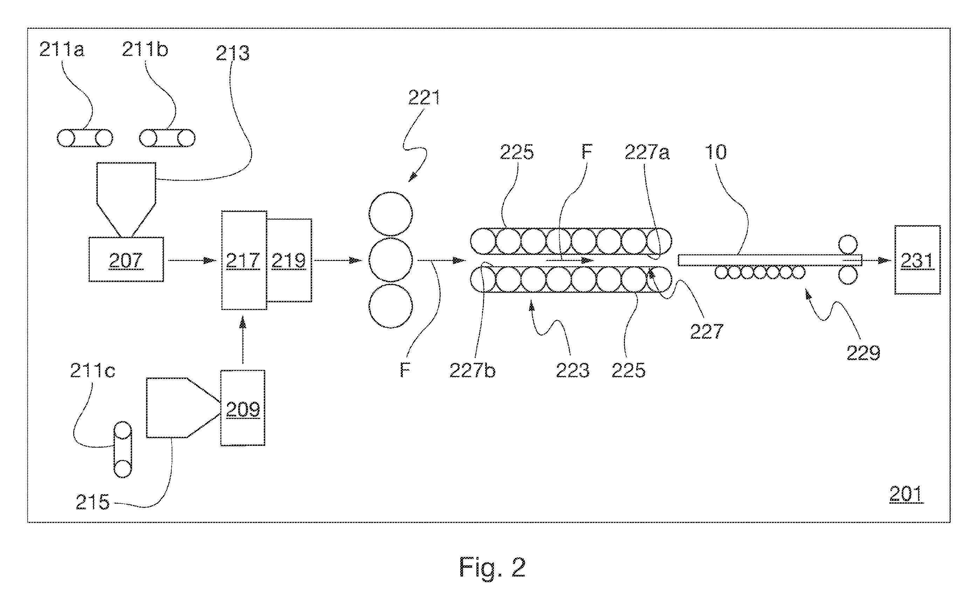

Referring to Fig. 2, in a preferred exemplary embodiment of the invention, extrusion station 201 includes:
- a first extruder 207, or central extruder, for the material forming the charge, typically scraps or residues from the manufacture and/or the use of the decorative plastic laminates, reduced to powder and/or grains, generally by means of a mill, with a grain size depending on the characteristics of the material; and
- a second extruder 209, or side extruder, for the thermoplastic resin(s), such as for instance polyethylene or polypropylene, possibly even recycled plastics.

Extrusion station 201 is further equipped with a dosing assembly comprising three loss-in-weight gravimetric dosers 211a, 221b, 211c of the belt type, which can be used for both grains and powders and are preferably directly mounted on the frames of extruders 207 and 209 in correspondence with a respective hopper 213 and 215. The three dosers are respectively used for the pulverised charge, the additives, if any (for instance UV absorbers for preventing resin decolouration), and the resin, respectively.

Extrusion station 201 further includes a head 217 with a lip 219 from which the sheet material comes out.

In a preferred embodiment, head 217 is at least 1450 mm wide, has seven heating zones and is equipped with two kinds of lip 219 for the attainment of two different sheet thicknesses, in the ranges 4 to 12 mm and 15 to 28 mm, respectively.

Always with reference to extrusion station 201, a calender 221 is further provided downstream lip 219 and it comprises, in a preferred exemplary embodiment of the invention, three rollers of polished steel.

The feeding speed of calender 221 for the production of sheets with a high thickness, i.e. typically in the range 15 to 28 mm, is preferably very low, being inversely proportional to the amount of material coming out from lip 219 of head 217. Being the flow rate the same, the greater the amount of material coming out from lip 219, the lower the speed of calender 221.

In an exemplary embodiment of the invention, the calender speed was of the order of 0.3 - 0.4 m/min.

A continuous roller press 223 is preferably provided downstream calender 221 for cooling sheet 10.

Said press 23 preferably comprises a set of rollers 225, eight pairs in the illustrated example, through which a fluid, generally diathermic oil, may flow for cooling or heating the rollers depending on the need.

The pressure of such rollers 225, suitably adjusted depending on the thickness of sheet 10 moving between them in the direction of arrows "F", is exerted on a double steel ribbon 227, namely a upper ribbon 227a and a lower ribbon 227b. These ribbons, by resting against sheet 10, cool it, by lowering the temperature from about 130-140° at the entrance into press 223 to about 70-80° at the exit form said press. The temperature of sheet 10 leaving calender 221 generally depends on the thickness and the higher the thickness, the higher the temperature of the sheets produced.

A roller conveyor device 229, also referred to in the art as "drawing zone", is provided downstream roller press 223 described above. In such a device, sheet 10 is further cooled for becoming physically stabilised in order to remain as planar as possible.

In an exemplary embodiment of the invention, such a drawing zone was about 25-30 m long.

The length of the drawing zone is determined depending on the thickness of sheet 10, and it is generally reduced for low thicknesses and is longer for higher thicknesses. In the alternative, in order to reduce the length of drawing zone 229, it is possible to strengthen the cooling at roller press 223.

A conventional guillotine shear 231 is located at the end of roller conveyor 229 for cutting sheet 10 into sections of the desired length.

Also this portion of the plant serves to dissipate heat so as to cool and dimensionally stabilise the sheet.

A side finishing device (not shown) can be possibly provided for direct on-line removal of the selvages.

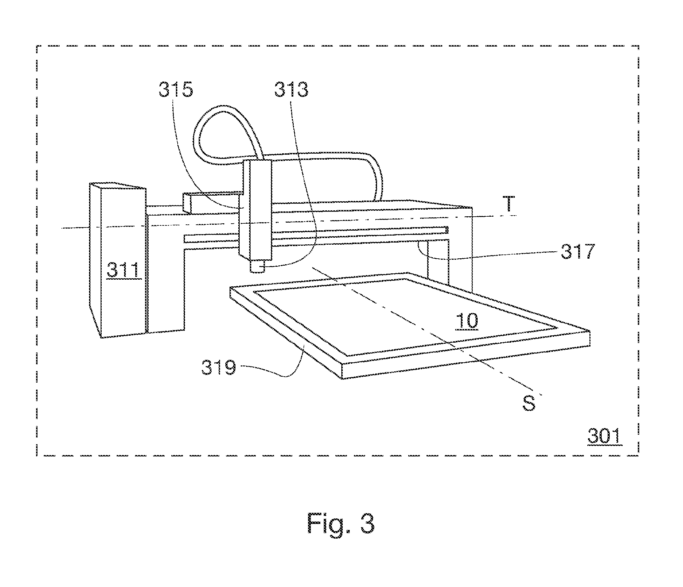

Referring to Fig. 3, there is schematically shown plasma pre-treatment station 301. It comprises: a plasma generator 311; a fixed plasma activation unit with a nozzle 313 mounted on an electro-pneumatically controlled rotating head 315, which is associated with a guide 317 and can perform a transversal translation along axis "T" perpendicular to direction "S" of movement of sheet 10; and a roller conveyor device 319, with automatic forward movement (feed) by a predetermined step for conveying sheets 10 passing through station 301. A filter battery (not shown) for purifying air supplied to nozzle 313 is further provided in association with station 301.

Clearly, if both faces of substrate 10 are to be activated, it will be necessary to repeat the operation in station 301 by turning sheet 10 or by providing a second head operating on the opposite side.

The most significant process parameters determining the wettability effect (surface tension) on the surface of the sheet to be ennobled are:
- s =: advance step of the sheet in station 301;
- h =: distance between nozzle 313 of rotating head 315 and the surface to be treated in substrate 10;
- v =: feeding speed of head 315;
- P =: output power from plasma generator 311;
- g =: pressure of the process gas (air).

The following conditions have proved suitable for the desired surface activation of sheets of composite material:
30 < s < 100 (mm)
5 < h < 20 (mm)
5 < v < 40 (m/min)
15 < P < 22 (kV)
2 < g < 6 (bar).

Advantageously, the plasma surface activation according to the invention enables an optimum adhesion between the thermoplastic support consisting of the substrate of composite material, preferably in sheet form, and the thermosetting decorative layers on both opposite surfaces of the substrate. In the absence of the plasma pre-treatment, the subsequent ennobling could not be successful due to both the lack of chemical affinity between the materials, and the low surface tension of the substrate.

According to the invention, ennobling station 401 comprises a press with hot-cold cycle or a painting assembly, preferably using curtain coating technology.

In a preferred embodiment of the invention, shown in Fig. 4, ennobling station 401 comprises a press 411 with hot-cold cycle, multi-chamber structure and automatic loading.

Said press 411 incorporates a hydraulic piston pressing assembly 413, capable of attaining pressures of the order of 9.8 MPa, and has a plurality of parallel horizontal chambers 415 (only one of which is shown in Fig. 4), defined by corresponding lower and upper pressing planes 415a, 415b, into which pack 417 of layered material to be pressed is loaded by means of respective trays 419.

Moreover, a heating/cooling liquid coming from a corresponding delivery circuit, not shown, flows inside said pressing planes 415a, 415b.

In the exemplary embodiment of the invention shown in Fig. 4, pack 417 of layered material to be pressed comprises a sheet 10 of composite material, plasma-activated on both faces, onto which there are superimposed in succession, on each side, a sheet 11 of decorative melamine paper of the kind normally used in manufacturing the laminates, a sheet 13 of finishing paper, a thin metal sheet 15, for instance of stainless steel about 3 mm thick, and five pads 17.

Metal sheets 15 are preferably made of stainless steel: They have a certain degree of brilliance, can be gloss or matt, smooth or embossed, etc., and aim at imparting the desired surface characteristics to the decorative layer consisting of the paper impregnated with melamine resin. Of course, said metal sheets 15 will be removed at the end of the pressing operation and can be used again for the subsequent cycle.

Pad sheets 17 are sheets of non-impregnated paper and are mainly intended to uniformly distribute the pressure on layer pack 417 during pressing and to compensate possible lacks of uniformity in the thickness of composite substrate 10, so that the adhesion of the melamine decorative layers is not compromised.

Said sheets 17 moreover are to make the increase of the temperature gradient during heating gradual, so as to enable the attainment of the desired degree of polycondensation and the consequent adhesion between the thermosetting resin and the thermoplastic substrate. Thanks to said sheets 17, heat supply to transparent melamine resin is gradually dosed, and yellowing phenomena due to the additives contained in the same resin are avoided.

Finishing paper sheets 13 are sheets of paper treated with particular agents such as parting agents or the like, and they are intended to allow the decorative surface to take given surface structures and, in certain cases, to protect the metal sheets from possible chemical attacks, migrations or abrasions or scratches.

In some cases, it is convenient to interpose intermediate layers, called "interlayers", between the substrate of composite material and the decorative layers, which interlayers consist for instance of nonwoven fabric, liquid adhesion promoters. thermoplastic films, overlays impregnated with synthetic resins (epoxy, MF, etc.), in order to form a so-called compensating layer which assists in preventing the formation of cracks when highly structured finishes are imparted to the decorative layer.

Exemplary conditions for the in-press ennobling of the sheets of composite material, surface-activated by means of a plasma treatment according to the invention, with decorative papers impregnated with melamine resin, were:
25 < Ps < 60, where Ps = specific pressure in Kg/cm²;
3 < N < 30, where N = number of pad sheets;
130 < I.R. < 165, where I.R. is the temperature of the heating liquid (°C);
120 < Tₘₐₓ < 160, where Tₘₐₓ is the maximum temperature attained in the press planes;
20 min < t < 45 min, where t is the overall compression time.

According to the invention, each layer pack 417 enters the respective chamber 415 in the press while being placed on a corresponding loading tray 419.

When all press chambers 415 have been loaded, the press is closed at the preset pressure and the heating step, performed by the introduction of heating liquid, typically overheated/pressurised water, into press planes 415a, 415b, is started. Said heating step determines a ramp of temperature increase from 40° to about 150° in correspondence of chambers 415.

In an exemplary embodiment of the invention, pressurised water at 150°C was introduced into the press planes through the circuit conduits and was made to circulate for a time sufficient to heat by conduction the pads, the metal sheets, the decorative papers and the support, thereby resulting in the complete cross-linking of the melamine-formaldehyde resin the decorative papers are impregnated with and, above all, allowing the adhesion of the decorative papers to the substrate which had previously undergone the plasma treatment.

Once a time sufficient for the attainment of the conditions of cross-linking and adhesion mentioned above has elapsed, the water circulating in the press planes is allowed to cool, typically down to a temperature of about 20 - 30°C, by means of a switching valve and a corresponding heat exchanger, in order to dimensionally stabilise the pressed and heated support, thereby obtaining the sheet consolidation.

Advantageously, according to the invention, the plasma pre-treatment step imparts improved wettability properties to the sheet surface, which allow adhesion of decorative layers for manufacturing ennobled recycled and/or recyclable panels.

Laboratory tests carried out on the product obtained with melamine-formaldehyde decorative papers having controlled reactivity, such as for instance the papers used for producing CPL's (continuous pressure laminates), have confirmed the optimum degree of adhesion between the thermoformable support and the paper.

According to the invention, it is possible to impart all surface finishes typical of the decorative laminates to the panel, while exploiting all economic and ecologic advantages of the recycled product.

The process for manufacturing the stratified composite panel, plasma-activated and in-press ennobled with layers of decorative paper impregnated with melamine resin according to the described embodiment of the invention, is preferably a discontinuous process, since the coupling between the thermosetting and the thermoplastic materials takes place in static manner (multi-plane press) and not in dynamic manner, as in the case of a continuous coupling. Said discontinuous process is suitable for application to substantially any thickness of the sheet of composite material. Also a process carried out in continuous manner, if the sheet thickness allows so, falls however within the scope of the invention.

### Example

In an exemplary embodiment of the invention, stratified panels of recycled thermoformable composite material, obtained from scraps or residues from the manufacture and/or the use of decorative plastic laminates, were ennobled with decorative papers impregnated with melamine-formaldehyde resin (MF).

In particular, white decorative cellulose paper for laminates was used, having a weight of 125 g/m², impregnated with water-based MF resin in a 53% concentration and containing 7% volatile substances.

In the alternative, it was possible to use a decorative layer consisting of a thin metal sheet of aluminium.

Said panel of recycled composite material, obtained from scraps or residues from the manufacture of decorative plastic laminates, was produced to an average thickness of 10 mm in accordance with the teaching of EP 0 395 128.

In particular, scraps of a decorative plastic laminate with the following average composition were used:

| | |
|---|---|
| Cellulose (from Kraft paper) | 63% |
| Phenolic resin (resitols) | 18% |
| Phenolic resin (resites) | 7% |
| Melamine resin | 6% |
| Mineral inerts | 6% |

These scraps were ground in a hammer mill and screened to obtain the following particle sizes:

| screen mesh opening | % by weight |
|---|---|
| < 0.8 | 5 |
| < 0.5 | 18 |
| < 0.3 | 10 |
| < 0.2 | 34 |
| < 0.1 | 33 |

Polypropylene homopolymer with a fluidity index of 3 was used as the thermoplastic polymer.

The laminate scraps and the propylene were continuously fed to an extruder, so as to obtain the following flow rates:

| | |
|---|---|
| Powder of laminate scraps | about 40 kg/h |
| Polypropylene | about 60 kg/h |

The extrusion temperature was about 220°C and the sheet leaving the extruder was calendered, cooled and cut to obtain a stabilised material.

In this exemplary embodiment, the following parameters were adopted for the plasma pre-treatment step:
s = 30 mm
h = 15 mm
v = 20 m/min
P = 90% of 23 kV
g = air at 3 bar.

Average values of surface tension detected by using suitable inks were of the order of 52 mN/cm and in the range 48 to 56 mN/cm.

The following operating conditions were adopted for the in-press ennobling of the sheets of composite material, surface-activated by means of plasma pre-treatment:
Ps = 40 kg/cm
N=5
I.R. = 150°C
Tₘₐₓ = 140°C
t = 30 min

It is clear that the above description was given only by way of non-limiting example and that changes and modifications are possible without departing from the scope of the invention.

## Claims

1. Process for the production of decorative panels based on thermoplastic resin and decorative plastic laminates and/or manufacturing scraps thereof, comprising the steps of:
a) forming a substrate made of a composite material starting from decorative plastic laminates and/or manufacturing scraps thereof and thermoplastic resin, said decorative plastic laminates including layers of fibrous material impregnated with thermosetting resins;
b) subjecting said substrate to a pre-treatment of plasma surface activation;
c) ennobling said substrate through the application of a decorative layer.

2. Process according to claim 1, wherein said thermoplastic resin is a polyolefin, e.g. polyethylene, polypropylene or the like.

3. Process according to claim 1, wherein said decorative layer comprises a layer selected in the group comprising: decorative paper sheets, metallic sheets, paints, polymeric films, veneer sheets made of natural wood, fabrics and non-woven fabrics.

4. Process according to claim 3, wherein said decorative paper sheets are sheets impregnated with one or more synthetic resins such as aminoplastic resins, e.g. melamine formaldehyde resins (MF), polyester resins (PES), acryl-polyurethane resins, urea-formaldehyde resins (UF).

5. Process according to any one of the preceding claims, wherein said plasma ennobling step is carried out in air at atmospheric pressure.

6. Plant for the production of decorative panels based on thermoplastic resin and decorative plastic laminates and/or manufacturing scraps thereof, comprising:
- an extrusion station (201) for the production of a substrate preferably in the form of a sheet (10) made of a composite material, starting from scraps or residues of manufacture or use of decorative plastic laminates including layers of fibrous material impregnated with thermosetting resins;
- a station (301) for plasma pre-treatment said sheets (10);
- a station (401) for ennobling said plasma-activated sheets (10).

7. Plant according to claim 6, wherein said plasma pre-treatment station (301) comprises a plasma generator (311), a plasma activation unit equipped with a nozzle (313) mounted on a rotatable head (315) associated to a guide (317) and transversally sliding along an axis "T" perpendicular to the feeding direction "S" of the sheet (10) to be treated.

8. Plant according to claim 7, wherein:
30 < s < 100 (mm), where s = advance step of the sheets in the pre-treatment station (301);
5 < h < 20 (mm), where h = distance between the nozzle (313) of the rotating head (315) and the surface to be treated in the substrate (10);
5 < h < 20 (mm), where h = distance between the nozzle (313) of the rotatable head (315) and the surface to be treated of the substrate (10);
5 < v < 40 (m/min), where v = feeding speed of the head (315);
15 < P < 22 (KV), where P = output power provided by the plasma generator (311);
2 < g < 6 (bar), where g = pressure of the processing gas (air).

9. Plant according to claim 6, wherein said ennobling station (401) comprises a multi-bay press with a warm/cold cycle and wherein the material arranged in layers to be pressed comprises a sheet (10) of composite material, plasma-activated on both sides, wherein on both sides a sheet of melamine decorative paper (11), a finishing sheet of paper (13), a metal sheet (15) and pads (17) are provided in this order.

10. Decorative panel based on thermoplastic resin and decorative plastic laminates and/or scraps of their manufacture, **characterized in that** it is obtained through the process as claimed in any one of the claims from 1 to 5.
